# EUROPÄISCHE PATENTSCHRIFT

(11) **EP 0 370 173 B1**
(45) Veröffentlichungstag und Bekanntmachung des Hinweises auf die Patenterteilung: **05.01.1994**
(21) Anmeldenummer: 89114493.3
(22) Anmeldetag: 05.08.1989
(51) Int. Cl.: F16D 66/02

(54) **Bremszylinder**
Brake cylinder
Cylindre de frein

(30) Priorität: 22.10.1988 DE 3836080
(43) Veröffentlichungstag der Anmeldung: 30.05.1990
(73) Patentinhaber: WABCO Vermögensverwaltungs-GmbH, D-30432 Hannover (DE)
(72) Erfinder: Frania, Josef, D-3000 Hannover (DE)
(74) Vertreter: Schrödter, Manfred, Dipl.-Ing.

(56) Entgegenhaltungen:
- EP-A- 0 033 599
- DE-A- 2 846 652

## Beschreibung

Die Erfindung betrifft einen Bremszylinder nach dem Oberbegriff des Patentanspruchs 1.

Ein derartiger Bremszylinder ist aus der DE 28 46 652 A1 bekannt. Dessen Kolben weist an einer zylindrischen Verlängerung einen erhöhten axial gerichteten Gleitstreifen auf, der entsprechend seiner festgelegten Längen im Zusammenwirken mit einem Schalter als Schaltnocke wirkt, um nach Überschreiten dieser festgelegten Länge das unterschiedliche Höhenniveau anzuzeigen. An der zylindrischen Verlängerung sind in Umfangsrichtung weitere Gleitstreifen vorgesehen, damit der Kolben stabil axial verschoben und radial geführt werden kann. Bei normalem Hub des Kolbens bleibt der Schalter unbetätigt, bei einem ungewöhnlich großen Hub erfolgt ein mechanisches Umschalten des Schalters zwecks Schließen eines Stromkreises mit elektrischer Anzeige. Somit wirkt dieser Schalter als Warnschalter. Für eine kontinuierliche Erfassung seines Kolbenhubs ist dieser Bremszylinder nicht geeignet.

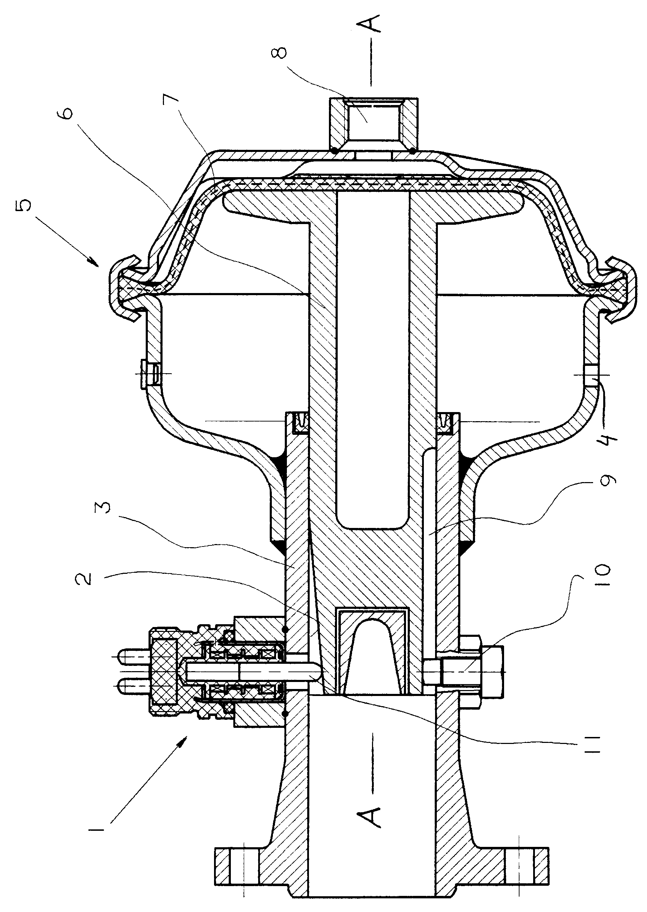

Aus Fig. 2 der DE 32 46 731 A1 ist ein Arbeitszylinder für universelle Anwendung bekannt, dessen Kolben eine Stange mit einem kegligen Ende aus magnetischem Material trägt, wobei dieses Ende als ein axial verschieblicher, radial geführter Teil des Kolbens und die Mantelfläche des kegligen Endes als eine zur Verschiebeachse des Kolbens geneigte Fläche angesehen werden können. Der Kolbenhub dieses Arbeitszylinders wird kontinuierlich mittels eines am Gehäuse angebrachten Hallsensors überwacht, der seinen radialen Abstand zu der Mantelfläche des kegligen Endes als Maß für den Kolbenhub erfaßt. Zum Einsatz in einem Bremszylinder ist diese Lösung nicht brauchbar, da die Stange am Kolben und ihre Ausstattung mit einem Ende aus magnetischem Material zu aufwendig sind. Darüber hinaus steht in einem Bremszylinder in der Regel der Einbauraum für die Stange nicht zur Verfügung.

Der Erfindung liegt die Aufgabe zugrunde, einen Bremszylinder der eingangs erwähnten Art mit einfachen Mitteln so zu verbessern, daß er eine kontinuierliche Erfassung seines Kolbenhubs ermöglicht.

Diese Aufgabe wird durch die im Patentanspruch 1 angegebene Erfindung gelöst. Weiterbildungen und vorteilhafte Ausgestaltungen der Erfindung sind in den Unteransprüchen angegeben.

Die Erfindung läßt sich kostengünstig unter Verwendung eines handelsüblichen fühlergesteuerten Wegsensors, wie er beispielsweise in der DE 33 43 885 A1 beschrieben ist, ausführen.

Die Erfindung eröffnet die Möglichkeit, den Zustand bzw. das Betriebsverhalten der zugeordneten Bremseinrichtung in ein elektronischen Diagnosesystem, sei es werkstoffgebunden, sei es im Falle eines Fahrzeugs bordeigen, einzubeziehen. Weist die Bremseinrichtung eine selbsttätige Nachstelleinrichtung auf, so deutet eine Zunahme des Kolbenhubs des Bremszylinders auf einen Defekt der Nachstelleinrichtung hin. Im Falle einer Bremseinrichtung ohne Nachstelleinrichtung gibt hingegen der Kolbenhub einen Hinweis auf den Verschleißzustand des Bremsbelags. In beiden Fällen ermöglicht die Erfindung die Feststellung, ob auch unter ungünstigen Betriebsbedingungen, z.B. bei heißer Bremse, ausreichender Kolbenhub sichergestellt ist.

Die Erfindung läßt sich mit jedem geeigneten Bremszylinder unabhängig von der Art des ihn beaufschlagenden Druckmittels ausführen. Nur beispielhaft seien als Druckmittel Druckluft und Bremsflüssigkeit genannt.

Die Erfindung läßt sich auch unabhängig von der Art des in dem Bremszylinder eingesetzten Kolbens ausführen. Insoweit seien beispielhaft die Ausgestaltungen mit Membrankolben und mit Kolben mit Gleitdichtung erwähnt.

Die Erfindung erhöht die aktive Sicherheit der zugehörigen Bremsanlage, was insbesondere bei Fahrzeugen vorteilhaft ist. Dies gilt insbesondere, wenn die zugeordnete Bremseinrichtung der Bauart "Spreizkeilbremse" ist, da eine solche in der Regel mit einer selbsttätigen Nachstelleinrichtung versehen ist und wegen der Einbauverhältnisse eine visuelle Überwachung der Nachstelleinrichtung selbst und/oder des Kolbenhubs sowie eine Anzeige desselben kaum gestattet.

Weitere Vorteile der Erfindung werden in der nachstehenden Erläuterung anhand eines in der Zeichnung dargestellten Ausführungsbeispiels beschrieben.

Die Figur zeigt einen Bremszylinder in einer für Spreizkeilbremsen besonders geeigneten Bauart mit einem Gehäuse (5) und einem Kolben (6, 7) der aus einer in dem Gehäuse (5) eingespannten Membran (7) als Kolbenkörper und einer Kolbenstange (6) besteht. Die Membran (7) teilt in dem Gehäuse eine über einen Anschluß (8) mit Druckmittel beaufschlagbare Druckkammer von einer Atmosphärenkammer ab, die über einen Durchlaß (4) mit Umgebungsdruck beaufschlagt ist.

Der Kolben (6, 7) ist entlang einer durch die Linie (AA) angedeuteten Verschiebeachse verschieblich. Die Kolbenstange (6) ist darüber hinaus radial in dem Gehäuse (5) geführt und bildet daher einen axial verschieblichen, radial geführten Teil des Kolbens (6, 7). Zum Zwecke ihrer radialen Führung dringt die Kolbenstange (6) mit ihrem der Membran (7) abgewandten Ende in eine rohrförmige Ausbildung (3) des Gehäuses (5) ein. An diesem Ende weist die Kolbenstange (6) an ihrem Außenumfang eine radial ansteigende Nut auf, deren Bodenfläche eine zur Verschiebeachse (AA) des Kolbens (6, 7) geneigte Fläche (2) bildet.

Die Neigung der Fläche (2) verläuft, von der Membran (7) aus gesehen, fallend.

Im wesentlichen quer zur Verschiebeachse (AA) ist an der rohrförmigen Ausbildung (3) des Gehäuses (5) ein fühlergesteuerter elektrischer Wegsensor (1) angeordnet, dessen Fühler (11) mit der geneigten Fläche (2) im Eingriff steht.

Bei einer Druckbeaufschlagung der Druckkammer über den Anschluß (8) wird der Kolben (6, 7), auf die Zeichnung gesehen, nach links um einen Kolbenhub verschoben. Dabei schiebt die geneigte Fläche (2) den Fühler (11) um einen dem Kolbenhub entsprechenden Weg in den Wegsensor (1) hinein. Dieser gibt dabei ein diesem Weg entsprechendes elektrisches Signal ab, welches als Abbild des Kolbenhubs ausgewertet werden kann.

Bei Druckentlastung der Druckkammer wird der Kolben (6, 7) durch nicht dargestellte Rückstellmittel in seine Ausgangslage zurückgeschoben. Die geneigte Fläche (2) ermöglicht dabei nicht näher beschriebenen Rückstellmitteln im Wegsensor (1), auch den Fühler (11) in seine Ausgangslage zurückzustellen.

Mit zunehmendem Verschleiß der Bremsbeläge der von dem dargestellten Bremszylinder betätigten Bremseinrichtung vergrößert sich bei gegebenem Druck der Kolbenhub. Das von dem Wegsensor (1) abgegebene elektrische Signal kann deshalb auch zur Anzeige bzw. Überwachung des Verschleißzustandes der Bremsbeläge ausgewertet werden.

Zur Entlastung des Fühlers (11) von Querkräften infolge Drehbewegungen der Kolbenstange (6) ist diese drehfest im Gehäuse (5) gelagert. Zu diesem Zweck weist die Kolbenstange (6) an ihrem Außenumfang eine Längsnut (9) auf, die längsverschieblich eine in die rohrförmige Ausbildung (3) des Gehäuses (5) eingeschraubte Sicherungsschraube (10) aufnimmt.

Der Fachmann erkennt, daß sich der Schutzbereich der Erfindung in dem dargestellten Ausführungsbeispiel nicht erschöpft, sondern alle Ausgestaltungen erfaßt, deren Merkmale sich den Patentansprüchen unterordnen.

Insbesondere kann anstelle einer Membran als Kolbenkörper auch ein Kolben mit gleitender Abdichtung eingesetzt werden. Die geneigte Fläche kann bei geeigneter Unterbringungsmöglichkeit des Wegsensors auch an einem anderen Teil des Kolbens als der Kolbenstange angeordnet werden. Auch kann die Neigung der geneigten Fläche anders als im Ausführungsbeispiel verlaufen, beispielsweise vom Kolbenkörper (Membran) aus gesehen steigend. Auch muß die geneigte Fläche nicht eben sein; vielmehr kann sie konkav oder konvex gekrümmt sein, sofern nur eine Zuordnung von Kolbenhub und Hub des Fühlers des Wegsensors gewährleistet ist. Die geneigte Fläche kann auch die Mantelfläche eines Kegels oder eines anderen drehsymmetrischen Körpers sein. Diese kann an jedem geeigneten Teil des Kolbens, also sowohl am Kolbenkörper als auch an der Kolbenstange angeordnet sein. Diese Ausgestaltung hat den Vorteil, daß auf eine drehfeste Lagerung des betreffenden Teils zum Schutze des Fühlers des Wegsensors vor Querkräften verzichtet werden kann.

## Patentansprüche

1. Bremszylinder mit einem Gehäuse (5) und einem Kolben (6, 7), der aus einem Kolbenkörper (7) und einer Kolbenstange (6), die im Gehäuse (5) radial geführt und axial verschieblich ist, besteht, dadurch gekennzeichnet, daß ein Teil des Kolbens (6, 7) eine zur Verschiebeachse (AA) des Kolbens (6, 7) geneigte Fläche (2) aufweist und daß im wesentlichen quer zur Verschiebeachse (AA) des Kolbens (6, 7) am Gehäuse (5) ein fühlergesteuerter kontinuierlich messender elektrischer Wegsensor (1) befestigt ist, dessen Fühler (11) mit der geneigten Fläche (2) ständig im Eingriff steht.

2. Bremszylinder nach Anspruch 1, dadurch gekennzeichnet, daß die geneigte Fläche die Mantelfläche eines an dem Teil des Kolbens ausgebildeten Kegels ist.

3. Bremszylinder nach Anspruch 1, dadurch gekennzeichnet, daß die geneigte Fläche (2) die Bodenfläche einer radial ansteigenden Nut ist.

4. Bremszylinder nach einem der vorhergehenden Ansprüche, dadurch gekennzeichnet, daß der Teil des Kolbens (6, 7) eine Kolbenstange (6) ist.

5. Bremszylinder nach Anspruch 4, dadurch gekennzeichnet, daß die geneigte Fläche (2) an dem einem Kolbenkörper (Membran 7) abgewandten Ende der Kolbenstange (6) angeordnet ist.

## Claims

1. Brake cylinder with a housing (5) and a piston (6, 7) which comprises a piston body (7) and a piston rod (6) that is guided radially and is axially displaceable in the housing (5), characterized in that a part of the piston (6, 7) has a face (2) inclined to the displacement axis (AA) of the piston (6, 7) and substantially transversely to the displacement axis (AA) of the piston (6, 7) a continuously operative, feeler-controlled electrical displacement sensor (1) is secured to the housing (5), the feeler (11) of which displacement sensor is in constant engagement with the inclined face (2).

2. A brake cylinder according to claim 1, characterized in that the inclined face is the outer surface of a cone formed on the part of the piston.

3. A brake cylinder according to claim 1, characterized in that the inclined face (2) is the base of a radially ascending groove.

4. A brake cylinder according to one of the preceding claims, characterized in that the part of the piston (6, 7) is a piston rod (6).

5. A brake cylinder according to claim 4, characterized in that the inclined face (2) is arranged at the end of the piston rod (6) remote from a piston body (diaphragm 7).

## Revendications

1. Cylindre de frein comportant une enceinte (5) et un piston (6, 7) qui est constitué par un élément-piston (7) et par une tige de piston (6), laquelle est guidée radialement dans l'enceinte (5) et peut être déplacée axialement en translation, caractérisé par le fait qu'une partie du piston (6, 7) présente une surface (2) inclinée par rapport à l'axe (AA) de déplacement en translation du piston (6, 7), et par le fait qu'un capteur électrique de déplacement (1), mesurant de manière continue, commandé par palpeur, est fixé à l'enceinte (5), sensiblement perpendiculairement à l'axe de translation (AA) du piston (6, 7), le palpeur (11) de ce capteur étant en contact permanent avec la surface inclinée (2).

2. Cylindre de frein selon revendication 1, caractérisé par le fait que la surface inclinée est la surface périphérique d'un cône aménagé sur une partie du piston.

3. Cylindre de frein selon revendication 1, caractérisé par le fait que la surface inclinée (2) est la surface du fond d'une rainure dont la profondeur radiale est croissante.

4. Cylindre de frein selon l'une des revendications précédentes, caractérisé par le fait que la partie du piston (6, 7) est une tige de piston (6).

5. Cylindre de frein selon revendication 4, caractérisé par le fait que la surface inclinée (2) est disposée sur l'extrémité de la tige de piston (6) éloignée de l'élément-piston (membrane 7).
